# EUROPÄISCHE PATENTSCHRIFT

(11) **EP 1 090 829 B1**
(45) Veröffentlichungstag und Bekanntmachung des Hinweises auf die Patenterteilung: **23.04.2003**
(21) Anmeldenummer: 99810906.0
(22) Anmeldetag: 06.10.1999
(51) Int. Cl.: B62D 21/15, B61D 15/06

(54) **Anordnung zur Absorption von Aufprallenergie**
Impact energy absorbing device
Dispositif d'absorption de l'énergie d'un choc

(43) Veröffentlichungstag der Anmeldung: 11.04.2001
(73) Patentinhaber: Alcan Technology & Management AG, 8212 Neuhausen am Rheinfall (CH)
(72) Erfinder: Schlusemann, Thomas, 78244 Gottmadingen (DE)

(56) Entgegenhaltungen:
- EP-A- 0 802 100
- DE-A- 1 816 428
- DE-A- 4 440 426
- DE-C- 19 611 934
- FR-A- 2 635 064
- FR-A- 2 698 840

## Beschreibung

Vorliegende Erfindung betrifft ein Strassen- oder Schienenfahrzeug mit einer Anordnung zur Absorption von Aufprallenergie, enthaltend ein Einbauteil, welches mit einer ersten Endseite in einem Winkel an der Längsseite eines Profilbauteils befestigt ist und mit einer zweiten Endseite über ein Kollisions-Bauteil an eine dem Profilbauteil vorstehende Aufprallfläche gekoppelt ist, wobei die Aufprallfläche um ein Längenmass (a) der Stirnseite des Profilbauteils vorsteht.

Es ist bekannt, Energie absorbierende Bauteile an die Fahrzeugstruktur zu befestigen oder in die Fahrzeugstruktur zu integrieren. Diesen Bauteilen obliegt die Aufgabe, die bei einem Aufprall auf das Fahrzeug auftreffende Aufprallenergie teilweise oder vollständig zu absorbieren. Die Aufprallenergie wird dabei in der Regel unter Verformung des Bauteils in Wärme umgewandelt.

Mit dem Einbau von Energie absorbierenden Bauteilen sollen Personen, Frachtgut und die tragende Fahrzeugstruktur bzw. empfindliche Vorrichtungen am Fahrzeug vor Beschädigungen geschützt werden, indem die maximale Kraft- bzw. die negative Beschleunigungsspitze reduziert, d.h. der Aufprall bzw. der Stoss gedämpft wird. Beim Aufprall einer fahrenden Zugskomposition oder eines fahrenden Strassenfahrzeuges auf ein Hindernis sollen des weiteren die Fahrgastzellen keinen hohen Beschleunigungen ausgesetzt sein und möglichst wenig deformiert werden.

Es sind unterschiedliche Ausführungen von reversibel und irreversibel deformierbaren Energieabsorptionsbauteilen bekannt. So werden beispielsweise Hohlprofile als Energieabsorber eingesetzt, die unter Stauchung und Faltenbildung in Längsrichtung Aufprallenergie verzehren. Des weiteren sind wabenartige Bauteile oder Schaumstoffkörper bekannt die ebenfalls unter Deformation Aufprallenergie in Wärmeenergie umwandeln. Weiters sind auch Hohlstrukturen bekannt die bei einem Aufprall mit einem Energie absorbierenden Druckfluid gefüllt werden.

Diese Bauteile haben gemeinsam, dass sie in der Regel keine in die Fahrzeugstruktur integrierten Bauteile sind, sondern vielmehr Zusatzkonstruktionen an der Peripherie der Fahrzeuge darstellen.

Bei Schienenfahrzeugen ist es beispielsweise bekannt, zwischen Kupplung und Fahrgestell Energie absorbierende Bauteile einzubauen, welche bei mittleren Aufprallgeschwindigkeiten von bis 60 km/h einen Teil der beim Zusammenstoss generierten Aufprallenergie aufnehmen. Des weiteren sind bei Schienenfahrzeugen auch Puffer oder Kletterschutzvorrichtungen, sogenannte Anticlimber, zur Absorption oder Ablenkung von in Fahrzeuglängsrichtung wirkenden Aufprallkräften bekannt.

Die Publikationsschrift FR-A-2698840 beschreibt ein Schienenfahrzeug nach dem Oberbegriff des Anspruchs 1, mit einer im Pufferbereich angeordneten, Energie absorbierenden Struktur mit gegenseitig über Querprofile verbundenen faltbaren Deformationselementen.

Die bekannten Anwendungen weisen den Nachteil auf, dass sie verhältnismässig viel Platz benötigen, da die von Bauteilen absorbierbare Energie neben dem erreichbaren Kraftniveau wesentlich vom möglichen Deformationsweg einer verformbaren Struktur abhängt. Bei vielen Anwendungen im Fahrzeugbau steht für Energie absorbierende Strukturen jedoch aufgrund funktionstechnischer oder gesetzlicher Bestimmungen nur ein begrenzter Raum zur Verfügung. Des weiteren verursachen Energie absorbierende Bauteile ein höheres Fahrzeuggewicht, da diese in der Regel keine zusätzlichen funktionellen Aufgaben im Fahrgestell übernehmen.

Bekannte Strukturen zur Absorption von Aufprallenergie gewährleisten zudem in der Regel nur für kleine und mittlere Aufprallkräfte eine vollständige Energieabsorption. Bei einem stärkeren Aufprall kommt es hingegen nach Überwindung des Deformationsweges als Folge der unmittelbaren Krafteinwirkung auf den Rahmenquerschnitt, insbesondere auf die Fahrzeuglängsträger im Fahrgestell, zu einer markanten Kraft- und Beschleunigungsspitze.

Des weiteren besteht auch das Bedürfnis bestehende Fahrzeugstrukturen mit Energie absorbierenden Bauteilen nachzurüsten, um z.B. die Sicherheit zu erhöhen und den aktuellen Standards anzupassen. Aus konstruktiven Gründen oder aus Gründen der Wirtschaftlichkeit sind jedoch kaum geeignete Lösungen bekannt, die eine solches Nachrüsten der Fahrzeuge erlauben würden.

Der Erfindung liegt deshalb die Aufgabe zugrunde, ein Anordnung zur Absorption von Aufprallenergie zu schaffen, die gegenüber Lösungen nach dem Stand der Technik einen reduzierten Platzbedarf einnimmt, wobei die Anordnung weitere funktionelle Aufgaben in der Fahrzeugstruktur übernehmen soll. Des weiteren soll die genannte Anordnung, beispielsweise in Ergänzung zu weiteren Energie absorbierenden Bauteilen, insbesondere bei einem stärkeren Zusammenstoss, Aufprallenergie absorbieren und die Kraftspitzen brechen.

Erfindungsgemäss wird die Aufgabe dadurch gelöst, dass das Einbauteil in der Art eines starren Hebelarmes oder als Teil eines starren Hebelarmes einer Länge r ausgebildet ist, derart dass eine auf die Aufprallfläche wirkende Aufprallkraft unter Verschiebung des Kollisions-Bauteils in Richtung der einwirkenden Aufprallkraft eine Drehbewegung des Einbauteils um einen im Profilbauteil vorbestimmten Drehpunkt (P) und ein lokales Umbiegen des Profilbauteils am Drehpunkt (P) um ein Winkelmass bewirkt.

Unter Profilbauteil ist in diesem Text ein längliches Bauteil mit über seine Längsausdehnung gleichbleibendem oder sich änderndem Profilquerschnitt zu verstehen. Das Profilbauteil ist bevorzugt ein Trägerprofil der Fahrzeugstruktur, insbesondere des Fahrgestellrahmens. Das Trägerprofil ist vorteilhaft ein in Fahrzeuglängsrichtung verlaufendes Trägerprofil.

Durch lokales Schwächen des Profilbauteils kann beispielsweise der Drehpunkt, d.h. der Knick- oder Umbiegepunkt im Profilbauteil festgelegt werden. Weist der Profilbauteil keine besonderen Schwachstellen auf, so kommt der Drehpunkt konstruktionsbedingt in der Regel am Rande des Verbindungsabschnittes zwischen Einbauteil und Profilbauteil zu liegen.

In besonders zweckmässiger Ausgestaltung der Erfindung ist vorgesehen, dass das Einbauteil in der Art eines starren Hebelarmes ausgebildet und mit einer Endseite in einem Winkel an der Längsseite eines Profilbauteils befestigt ist, und der Drehpunkt im Profilbauteil am Rand des Verbindungsabschnittes zwischen Einbauteil und Profilbauteil liegt, derart dass eine auf die Aufprallfläche wirkende Aufprallkraft eine Drehbewegung des Einbauteils um den Drehpunkt in einem Radius, welcher gleich der Länge des Einbauteils ist, und ein lokales Umbiegen des Profilbauteils bewirkt.

Die Aufprallfläche steht dem Profilbauteil, d.h. der Stirnfläche des Profilbauteils, zweckmässig um ein Längenmass bzw. einen Abstand a vor. Bei einem Zusammenstoss zweier Fahrzeuge bzw. bei einem Aufprall auf ein Hindernis trifft die Aufprallkraft als erstes auf die vorgesehene Aufprallfläche. Die Aufprallfläche wird unter Abdrehen des Einbauteils um die Länge a zurückversetzt, gegebenenfalls unter Deformation von dazwischen liegenden, Energie absorbierenden Teilen. Die Aufprallkraft trifft erst nach Zurücksetzen der Aufprallfläche um die Länge a auf den Querschnitt des Profilbauteils auf.

Das Profilbauteil bzw. der Profilbauteilabschnitt ist zweckmässig nach zurückgelegter Distanz a der Aufprallfläche in Richtung der einwirkenden Aufprallkraft, d.h. bis zur Einwirkung der Aufprallkräfte auf den Querschnitt bzw. auf die Stirnseite oder stimseitige Endfläche des Profilbauteils, um ein Winkelmass von 0 bis 30°, vorteilhaft von 0 bis 10° am Drehpunkt P aus seiner ursprünglichen Lage umgebogen.

Der Abstand a ist folglich so bemessen, dass zum Zeitpunkt der direkten Einwirkung der Aufprallkräfte auf den Querschnitt bzw. die Stirnseite des Profilbauteils, das Profilbauteil, als Folge der Drehbewegung des Einbauteils, bereits um ein Winkelmass der vorgenannten Grössenordnung umgebogen ist.

Das Profilbauteil liegt vorteilhaft richtungsgleich zur Hauptkomponente der zu erwartenden Aufprallkraft. Das Einbauteil ist zweckmässig in einem Winkel zwischen 0° und 180°, vorzugsweise zwischen 45° bis 135°, insbesondere zwischen 80° bis 100°, mit einer Endseite am Profilbauteil befestigt.

Das Einbauteil ist zweckmässig einem, der zu erwartenden Aufprallkraft naheliegenden, Endabschnitt des Profilbauteils angebracht. Der Endabschnitt des Profilbauteils kann weitere Anbau- oder Verbindungsbauteile aufnehmen. Diese Anbauteile verhalten sich bei einem Aufprall jedoch zweckmässig derart, dass sie das Umbiegen des Profilbauteils in seinem Endabschnitt nicht hinauszögern oder verhindern.

Ein Aufprallereignis erfolgt in der Regel im Front- oder Heckbereich des Fahrzeuges mit einer Aufprall-Hauptkomponente in Fahrzeuglängsrichtung. In bevorzugten Ausführung der Erfindung ist deshalb die erfindungsgemässe Anordnung als front- oder heckseitiger Aufprallschutz gestaltet. Das Profilbauteil ist dabei ein Fahrzeuglängsträger, wobei das Einbauteil vorteilhaft am vorderen bzw. hinteren Endabschnitt des Fahrzeuglängsträgers angeordnet ist.

Die erfindungsgemässe Anordnung bewirkt eine bei einem Aufprall durch Umbiegen günstige Richtungsänderung des Profilbauteil in seinem dem Aufprallereignis nächstliegenden Abschnitt, derart, dass das Profilbauteil durch die fortschreitend auf den Querschnitt des Profilbauteils einwirkenden Aufprallkräfte unter Absorption derselben in eine gleichmässige, kontrollierte Abknick-Bewegung überführt wird.

Das Einbauteil kann ein Hohlprofil, wie ein Ein- oder Mehrkammerhohlprofil, ein offenes Profil, wie ein U-förmiges, V-förmiges, T- oder doppel-T-förmiges Profil, ein Rohr, ein Stab, ein flächiges Teil, z.B. ein Blech, insbesondere ein strukturiertes Blech, oder eine Kombination von vorgenannten Varianten sein. Des weiteren kann das Einbauteil aus einem Seil sein. Bevorzugt wird ein Blech, insbesondere ein strukturiertes Blech verwendet. Die Dicke des Bleches kann z.B. weniger als 10 mm, insbesondere weniger als 5 mm betragen.

Das Einbauteil kann aus einem Eisenmetall, wie Eisen, verzinntes oder verzinktes Eisen, Stahl, Stahllegierung oder aus einem Nicht-Eisenmetall, wie Buntmetalle, Magnesium und seine Legierungen, und insbesondere Aluminium und seine Legierungen, aus verstärktem Kunststoff, insbesondere aus faserverstärktem Kunststoff, oder aus einer Kombination vorgenannter Werkstoffe, insbesondere aus einem Metall-Kunststoffverbund, sein.

Die erfindungsgemässe Anordnung enthält zweckmässig ein Kollisions-Bauteil mit einer, zweckmässig peripher und quer zur erwartenden Hauptkomponente der Aufprallrichtung liegenden Aufprallfläche zur Aufnahme und Weiterleitung der Aufprallenergie. Das Kollisions-Bauteil ist mit dem Einbauteil, zweckmässig über Verbindungselemente, verbunden, vorteilhaft starr verbunden, derart dass die Aufprallenergie teilweise oder vollständig auf das Einbauteil abgeleitet wird. Das Kollisionsbauteil kann derart mit dem Einbauteil verbunden sein, dass es sich bei einem Aufprall gemeinsam mit dem Einbauteil um den Drehpunkt P bewegt. In einer bevorzugten Ausführungsform der Erfindung ist die Verbindung zwischen dem Einbauteil und dem Kollisionsbauteil dergestalt, dass sich das Kollisionsbauteil bei einem Aufprall in Fahrzeuglängsrichtung verschiebt.

Das Kollisions-Bauteil kann zusätzlich an einer tragenden Fahrzeugbodenstruktur befestigt sein. Die Befestigung ist vorteilhaft dergestalt, dass die Aufprallenergie vom Kollisions-Bauteil im wesentlichen auf das Einbauteil abgeleitet wird. Das Kollisions-Bauteil kann ein, gegebenenfalls modifiziertes, funktionelles Bauteil der Fahrzeugstruktur sein, z.B. im Falle eines Schienenfahrzeuges eine Puffer-, bzw. Kupplungsvorrichtung oder ein Kletterschutz. Das Kollisions-Bauteil kann auch ein integrales Bauteil des Einbauteiles sein.

Die tragende Fahrzeugbodenstruktur kann eine Rahmenkonstruktion aus beispielsweise über Querträger verbundenen seitlichen Fahrzeuglängsträgern sein. Des weiteren kann die tragende Fahrzeugbodenstruktur einen Fahrzeugboden aus beispielsweise längs und/oder quer zur Fahrzeugrichtung orientierten Fahrzeugboden-Profilen, wie Ein- und/oder Mehrkammerhohlprofilen, wobei die Fahrzeugboden-Profile profillängsseitig aneinander gereiht und miteinander verschweisst oder mittels Schrauben, Nieten, Kleben, Klemmen und dergl. oder Kombinationen davon verbunden sind, enthalten, wobei die Fahrzeugboden-Profile von seitlichen Fahrzeuglängsträgern oder Untergurten getragen werden. Die Fahrzeugbodenstruktur kann auch einen Fahrzeugboden aus Bodenplatten, insbesondere aus Verbundplatten oder Bodenblechen, enthalten.

Die Fahrzeugbodenstruktur kann aus verstärktem, insbesondere faserverstärktem Kunststoff, aus einem Eisenmetall, wie Eisen, verzinntes oder verzinktes Eisen, Stahl, Stahllegierung oder aus einem Nicht-Eisenmetall, wie Magnesium und seine Legierungen, und insbesondere Aluminium und seine Legierungen, oder aus einer Kombination vorgenannter Werkstoffe, insbesondere aus einem Metall-Kunststoff-Verbund, sein.

Ein zwischen den Fahrzeuglängsträgern oder Untergurten liegender Fahrzeugboden weist zweckmässig in Aufprallrichtung eine geringere Steifigkeit auf als das Einbauteil, so dass sich das Einbauteil bei einem Aufprall unter Deformation des Fahrzeugbodens in eine Drehbewegung führen lässt.

In einer bevorzugten Ausführungsform der Erfindung ist das Einbauteil an wenigstens einer Längsseite punktuell, teil- oder ganzflächig mit dem Fahrzeugboden verbunden, so dass ein Teil der Aufprallenergie während der Drehbewegung des Einbauteils weitflächig vom Fahrzeugboden unter Deformierung desselben absorbiert wird.

Durch die Anbindung des Einbauteils an den Fahrzeugboden wird die Steifigeit der durch das Einbauteil hergestellten Verbindung zwischen Kollisionselement und Profilbauteil erhöht. Das Einbauteil kann demzufolge weniger starr konzipiert werden. Es kann insbesondere flächig oder als Blech ausgebildet sein, da eine Verwindung des Bleches während des Aufpralls durch seine Anbindung an den Fahrzeugboden verhindert wird.

Das Einbauteil ist z.B. über eine Schweiss-, Schraub-, Niet-, Klemm- oder Klebverbindung oder einer Kombination genannter Verbindungsarten an das Profilbauteil befestigt. Die Verbindung kann kraft-, form- , reibschlüssig oder eine Kombination davon sein.

Ist das Einbauteil als Blech ausgebildet, so kann das Einbauteil eine abgewinkelte, insbesondere um 90° abgewinkelte, erste Endseite aufweisen und mit dieser am Profilbauteil anliegen und mittels Schweissverbindung oder mit die abgewinkelte Endseite durchstossenden Schraub- oder Nietverbindungen mit dem Profilbauteil verbunden sein. Des weiteren kann auch die zweite Endseite des Einbauteils eine abgewinkelte, insbesondere um 90° abgewinkelte, zweite Endseite als Verbindungsschnittstelle der vorbeschriebenen Art aufweisen. Abgewinkelt heisst, dass das Blech endseitig um einen Winkel zwischen 0° und 180° umgebogen ist.

Das Profilbauteil kann eine beliebige Querschnittsform aufweisen. Er kann z.B. ein Hohlprofil, wie ein Ein- oder Mehrkammerhohlprofil, ein offenes Profil, wie ein U-förmiges, V-förmiges, T- oder doppel-T-förmiges Profil oder eine Kombination dieser Querschnittsformen sein. Das Profilbauteil ist bevorzugt ein Hohlprofil, insbesondere ein Mehrkammerhohlprofil. Das Profilbauteil kann aus verstärktem, insbesondere faserverstärktem, Kunststoff, aus einem Eisenmetall, wie Eisen, verzinntes oder verzinktes Eisen, Stahl, Stahllegierungen, aus einem Nicht-Eisenmetall, wie Magnesium und seinen Legierungen, und insbesondere aus Aluminium und seinen Legierungen oder aus einer Kombination vorgenannter Werkstoffe, insbesondere aus einem Metall-Kunststoffverbund, sein.

Zwischen der Aufprallfläche und dem Einbauteil können weitere Energie absorbierende Bauteile, wie Hohlprofile, Wabenstrukturen, und dergl. angeordnet sein, welche beispielsweise bei kleineren bis mittleren Aufprallkräften Energie absorbieren, bevor ein Abdrehen des Einbauteils bzw. eine Verformung des Profilbauteils eingeleitet wird. Es können im weiteren auch Energie absorbierende Bauteile der erfindungsgemässen Anordnung nachgeschaltet sein, derart, dass bei erschöpftem Energieabsorptionsvermögen der erfindungsgemässen Anordnung die nachgeschalteten Energieabsorber aktiviert werden.

In bevorzugter Ausführung der Erfindung sind weitere Energieabsorber derart im Fahrzeugboden angeordnet, dass diese während des Abdrehens des Einbauteils bzw. des Umbiegens des Profilbauteils deformiert werden und zusätzlich Aufprallenergie absorbieren. Die zusätzlichen Energieabsorber sind vorteilhaft quer zur erwarteten Hauptkomponente der Aufprallrichtung angeordnete Hohlprofile im Fahrzeugboden.

In Ausgestaltung der Erfindung können in einem Fahrzeug mehrere erfindungsgemässe Einbauteile hintereinander am selben oder an verschiedenen Profilbauteilen oder nebeneinander an verschiedenen Profilbauteilen angeordnet sein. Durch die Anordnung mehrerer Einbauteile an einem Profilbauteil, kann beispielsweise das Profilbauteil bei einem Aufprall umfassend geschwächt werden, so dass die Aufprallkraft zu keinem Zeitpunkt unter Erzeugung einer Kraftspitze voll auf den Profilbauteilquerschnitt einwirkt, sondern vielmehr in einem fortschreitendem Umbiegen des Profilbauteils absorbiert wird.

Das Einbauteil kann des weiteren eine konstruktive Ausgestaltung eines Teiles der Fahrzeugbodenstruktur sein und z.B. zusätzlich als Verstrebung eine tragende oder versteifende Funktion im Fahrzeugboden einnehmen.

Die erfindungsgemässe Anordnung funktioniert richtungsunabhängig. Besonders grosse Wirksamkeit entfaltet die Anordnung, wenn die Hauptkomponente der Aufprallenergie in einem rechten Winkel zum Einbauteil wirkt.

Besonders vorteilhafte Anwendungsgebiete für die erfindungsgemässe energieabsorbierende Struktur sind: Lastkraftwagen-Unterfahr- und Aufprallschutz, Personenwagen-Aufprallschutz oder Aufprallschutz für Schienenfahrzeuge.

Mit der erfindungsgemässen Anordnung kann eine konstante Aufprallkraft ohne Kraftspitzen über den gesamten Deformationsweg aufrechterhalten werden, was eine optimale Energieabsorption auf kurzem Deformationsweg erlaubt.

Die erfindungsgemässe Anordnung zur Absorption von Aufprallenergie weist weiters den Vorteil auf, dass die Deformationen an Orten der Fahrzeugstruktur gelenkt werden, an welchen sie für das jeweilige Fahrzeug, seine Einrichtungen und Insassen am wenigsten schädliche Auswirkungen haben. Des weiteren erlaubt die erfindungsgemässe Anordnung die Energieabsorption trotz beschränktem Raumangebot. Die Anordnung erfordert keine besondere Anpassung und Optimierung der Fahrzeugstruktur, insbesondere der Fahrzeugbodenstruktur und kann in bestehende Fahrzeuge nachträglich eingebaut werden. Die Anordnung ist des weiteren ohne gezielte Schwächung der Fahrzeugstruktur einsetzbar. Dank der erfindungsgemässen Anordnung können bei einem Aufprall Teile der Fahrzeugstruktur in einen Verformungsmodus gezwungen werden, der bezüglich der auftretenden Kräfte, Wege und Energien, günstiger ist als der Modus, der sich ohne diese Beeinflussung infolge der gegebenen Ausgangsgeometrie der Fahrzeugstruktur ergeben würde.

Im folgenden wird die Erfindung beispielhaft und mit Bezug auf die beiliegenden Zeichnungen näher erläutert. Es zeigen:
- Fig. 1:: eine schematische Ansicht aus der Perspektive von einem Ausschnitt durch die Fahrzeugbodenstruktur eines Schienenfahrzeuges, eine Anordnung zur Absorption von Aufprallenergie enthaltend, wobei die Darstellung der erfindungsgemässen Anordnung der Situation vor dem Aufprall entspricht;
- Fig. 2:: eine schematische Ansicht aus der Perspektive von einem Ausschnitt durch die Fahrzeugbodenstruktur eines Schienenfahrzeuges, eine Anordnung zur Absorption von Aufprallenergie enthaltend, wobei die Darstellung der erfindungsgemässen Anordnung der Situation während bzw. nach dem Aufprall entspricht;
- Fig. 3:: ein schematisches Kraft-Weg-Diagramm während eines Fahrzeugaufpralls.

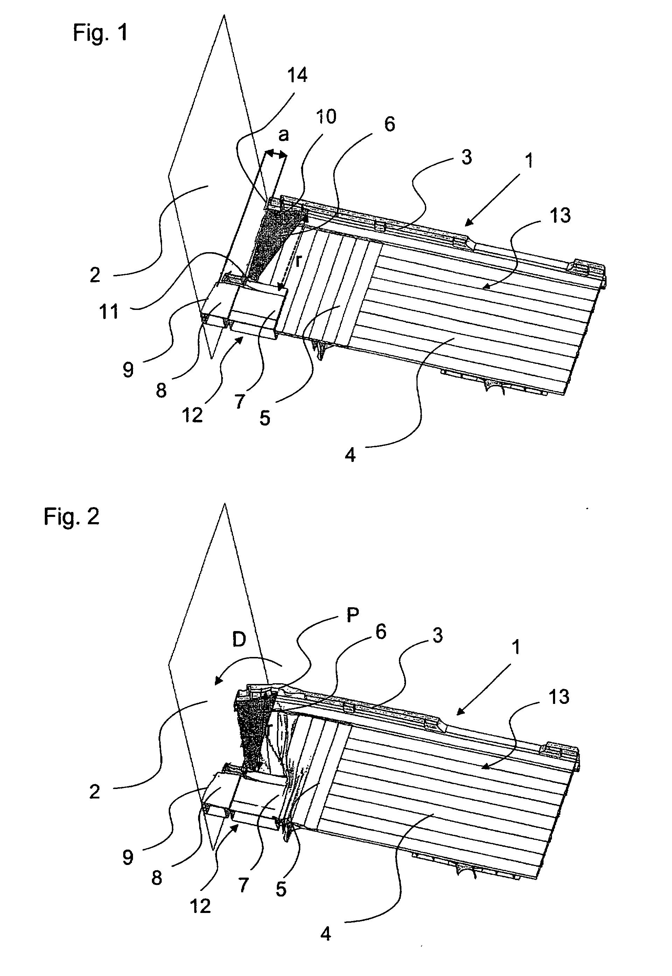

Die tragende Fahrzeugbodenstruktur 1 des Schienenfahrzeuges gemäss Fig. 1 enthält einen Fahrzeugboden 13 mit Fahrzeugboden-Querprofilen 5 und Fahrzeugboden-Längsprofilen 4, welche als Mehrkammerhohlprofile ausgebildet und längsseitig aneinander gereiht und gegenseitig verschweisst sind. Im frontseitigen Abschnitt sind die Fahrzeugboden-Querprofile 5 quer zur Fahrzeuglängsrichtung angeordnet. Die Fahrzeugboden-Längsprofile 4 im dahinter liegenden Abschnitt sind in Fahrzeuglängsrichtung angeordnet.

Die Fahrzeugbodenstruktur 1 ist in Fahrzeugquerrichtung lediglich halbseitig dargestellt, wobei die andere nicht gezeigte Hälfte der Fahrzeugbodenstruktur 1 spiegelsymmetrisch zur dargestellten Fahrzeugbodenstruktur 1 ist. Den seitlichen Abschluss der Fahrzeugbodenstruktur 1 bildet ein Fahrzeuglängsträger 3. Dieser ist ebenfalls als Mehrkammerhohlprofil ausgebildet.

Ein Einbauteil 6 der Länge r ist in Fahrzeugquerrichtung angeordnet und mit einer ersten Endseite 10 mittels Schweissverbindung an die Längsseite des vorderen Endabschnitt des Fahrzeuglängsträgers 3 angebracht. Das Einbauteil 6 ist trapezförmig und von flächiger Gestalt. Es weist eine Wanddicke von weniger als 5 mm auf.

Das Einbauteil 6 ist mit einer zweiten Endseite 11 über eine Schweissverbindung an ein mittig angeordnetes Kollisions-Bauteil 12, enthaltend einen Kletterschutz 8 mit Zwischenbauteil 7, befestigt. Die Endfläche des Kletterschutzes 8 ist frontseitig angeordnet und bildet die Aufprallfläche 9, welche die stirnseitige Endfläche 14 des Fahrzeuglängsträgers 3 um den Abstand a überragt. Der Abstand a kann mehrere Zentimeter bis mehrere Dezimeter, z.B. 20 bis 50 cm, insbesondere 25 bis 35 cm, betragen.

Das Einbauteil 6 ist mit dem Fahrzeugboden 13 verschweisst. Dadurch wird die Steifigkeit des flächigen Einbauteils 6 erhöht.

Durch den Aufprall des Schienenfahrzeuges auf das Hindernis 2 wird das Kollisions-Bauteil 12 um den Abstand a in Fahrzeuglängsrichtung entgegen der Aufprallkraft nach hinten geschoben. Durch die Verschiebung des Kollisions-Bauteils 12 wird das Einbauteil 6 in eine Drehbewegung in Drehrichtung D um den Drehpunkt P mit Radius r geführt (Fig. 2). Des weiteren bewirkt die Lageänderung des Einbauteils 6 die Stauchung und Deformation der Fahrzeugboden-Querprofile 5.

Im Drehpunkt P erfährt der Fahrzeuglängsträger 3 einen Knick. Durch die Knickbildung wird bereits Aufprallenergie absorbiert. Nach zurückgelegter Distanz a der Aufprallfläche 9 des Kollisions-Bauteils 12 beginnt die Aufprallkraft auf den Fahrzeuglängsträger 3 einzuwirken. Da die Aufprallkraft nicht frontal auf die Stirnseite sondern auf den geknickten Abschnitts des Fahrzeuglängsträgers 3, d.h. auf seinen Eckbereich zwischen Stirn- und Längsseite einwirkt, wird der Fahrzeuglängsträger bzw. der abgebogene Abschnitt in eine gleichmässige, kontrollierte Abknickbewegung überführt, wodurch Aufprallkraft absorbiert und die Kraftspitze gebrochen wird. Durch das erfolgte Abknicken des Fahrzeuglängsträger am Drehpunkt P wird der Fahrzeuglängsträger bei fortschreitender Krafteinwirkung nicht nur am Drehpunkt P sondern an weiteren Stellen, insbesondere ausgehend vom Drehpunkt P entgegen der Krafteinwirkungsrichtung, fortschreitend umgebogen.

Die in Fig. 1 und 2 gezeigte Energie absorbierende Anordnung eignet sich sowohl für den Front- als auch für den Heckbereich des Schienenfahrzeuges. Des weiteren kann die erfindungsgemässe Anordnung auch für den gegenüberliegenden, nicht gezeigten Fahrzeuglängsträger vorgesehen sein, so dass beispielsweise im Front- undloder Heckbereich des Fahrzeuges je zwei solche Einbauteile 6 angebracht sind.

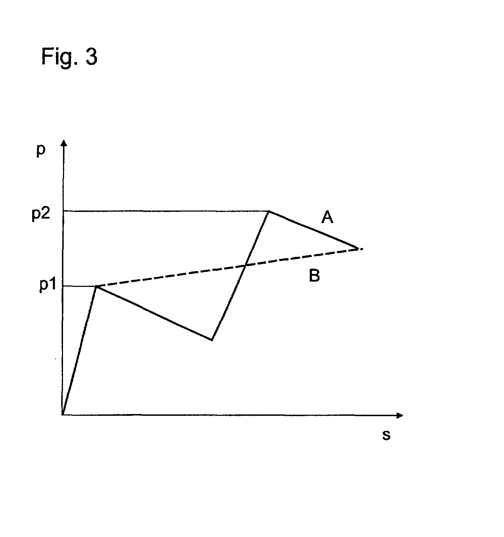

Kurve A und B in Fig. 3 zeigen schematisch den Verlauf der Aufprallkraft bzw. des Aufpralldruckes p in Abhängigkeit des zurück gelegten Verformungsweges s in Fahrzeuglängsrichtung, wobei der Achsenschnittpunkt mit s = 0 den Aufprallkontakt des Hindernisses mit der Aufprallfläche darstellt.

Kurve A zeigt den schematischen Kraftverlauf bei einem Fahrzeug mit herkömmlichen Deformationselementen, wie z.B. Rohrprofilstücke oder eine unter Deformierung Energie absorbierende Fahrgestellkonstruktion, ohne erfindungsgemässe Anordnung. Kurve B zeigt den schematischen Kraftverlauf bei einem Fahrzeug mit erfindungsgemässer Anordnung gemäss Fig. 1 bis 2.

Bis zur ersten Kraftspitze p₁ verlaufen die beiden Kurven A und B identisch. Die Kraftspitze p₁ ist die initiale Kraftspitze zu Beginn der Verformung, wenn das Hindernis 2 auf die Aufprallfläche 9 am Fahrzeug auftrifft.

In Kurve A nimmt bei fortschreitendem Deformationsweg die einwirkende Kraft wieder ab, da dem Hindernis nach Einleitung der Verformung der Deformationsbauteile weniger Widerstand entgegengesetzt wird. Nach zurück gelegtem Deformationsweg folgt die volle Krafteinwirkung auf den stirnseitigen Querschnitt bzw. Endfläche 14 des Fahrzeuglängsträgers 3, wodurch eine markante Kraftspitze p₂ erzeugt wird. Der Fahrzeuglängsträger verhält sich hinsichtlich der Krafteinwirkung als äusserst starr und wird erst unter sehr hoher Krafteinwirkung in ein Umbiegen gelenkt, womit die hohe Kraftspitze zu erklären ist.

In Kurve B nimmt bei fortschreitendem Deformationsweg die einwirkende Kraft wieder zu. Dies zeugt von einem zunehmenden Abbau der Aufprallenergie, welcher einerseits durch das Umbiegen des Fahrzeuglängsträgers 3 mittels Einbauteil 6 und andererseits durch die sich verformenden Fahrzeugboden-Querprofile 5, welche in diesem Fahrzeugabschnitt als Energie absorbierende Struktur konzipiert ist, zustande kommt. Nach zurück gelegtem Deformationsweg a folgt die Krafteinwirkung auf den umgebogenen Fahrzeuglängsträger 3. Der Fahrzeuglängsträger 3 ist in dieser Phase durch das Umbiegen bereits soweit geschwächt, dass dieser bei fortschreitender Deformation noch weiter umgebogen und seine Hohlstruktur gestaucht wird. Dadurch und dank der zusätzlichen Energieabsorption durch das Umbiegen des Fahrzeuglängsträgers 3 tritt keine zweite Kraftspitze p₂ analog zu jener in Kurve A auf.

Da die Fläche unter den Kraft-Weg-Kurven A bzw. B der Verformungsenergie entspricht, kann weiters aus Fig. 3 entnommen werden, dass die erfindungsgemässe Anordnung gegenüber einer herkömmlichen Konstruktion ein stark verbessertes Kompensationsvermögen für die auftreffende Aufprallenergie aufweist.

## Patentansprüche

1. Strassen- oder Schienenfahrzeug mit einer Anordnung zur Absorption von Aufprallenergie, enthaltend ein Einbauteil (6), welches mit einer ersten Endseite (10) in einem Winkel an der Längsseite eines Profilbauteils (3) befestigt ist und mit einer zweiten Endseite (11) über ein Kollisions-Bauteil (12) an eine dem Profilbauteil (3) vorstehende Aufprallfläche (9) gekoppelt ist, wobei die Aufprallfläche (9) um ein Längenmass (a) der Stirnseite (14) des Profilbauteils (3) vorsteht,
**dadurch gekennzeichnet, dass**
das Einbauteil (6) in der Art eines starren Hebelarmes oder als Teil eines starren Hebelarmes einer Länge r ausgebildet ist, derart dass eine auf die Aufprallfläche (9) wirkende Aufprallkraft unter Verschiebung des Kollisions-Bauteils (12) in Richtung der einwirkenden Aufprallkraft eine Drehbewegung des Einbauteils (6) um einen im Profilbauteil (3) vorbestimmten Drehpunkt (P) und ein lokales Umbiegen des Profilbauteils (3) am Drehpunkt (P) um ein Winkelmass bewirkt.

2. Anordnung nach Anspruch 1, **dadurch gekennzeichnet, dass** der Drehpunkt (P) im Profilbauteil (3) im Randbereich des Verbindungsabschnittes zwischen Einbauteil (6) und Profilbauteil (3) liegt, derart dass eine auf die Aufprallfläche (9) wirkende Aufprallkraft eine Drehbewegung des Einbauteils (6) mit Radius r um den Drehpunkt (P) und ein lokales Umbiegen des Profilbauteils (3) bewirkt.

3. Anordnung nach Anspruch 1, **dadurch gekennzeichnet, dass** das Profilbauteil (3) richtungsgleich zur Hauptkomponente der zu erwartenden Aufprallkraft liegt und das Einbauteil (6) in einem Winkel von 45° bis 135°, vorzugsweise von 80° bis 100°, mit der ersten Endseite (10) am Profilbauteil (3) angeordnet ist und die Aufprallfläche (9) der Stirnseite (14) des Profilbauteils (3) um einen Abstand (a) vorsteht.

4. Anordnung nach Anspruch 1, **dadurch gekennzeichnet, dass** die Aufprallfläche (9) um ein Längenmass (a) der Stirnseite (14) des Profilbauteils (3) vorsteht und das Längenmass (a) derweise bemessen, dass zum Zeitpunkt der direkten Einwirkung der Aufprallkräfte auf den Querschnitt bzw. die Stirnseite (14) des Profilbauteils (3), dieser bereits um ein Winkelmass von 0 bis 30°, insbesondere von 0 bis 10° am Drehpunkt (P) umgebogen ist.

5. Anordnung nach Anspruch 1, **dadurch gekennzeichnet, dass** das Profilbauteil (3) ein Ein- oder Mehrkammerhohlprofil aus einem Eisen- oder Nichteisenmetall, insbesondere aus Aluminium oder einer Aluminiumlegierung und das Einbauteil (6) aus einem Eisenoder Nichteisenmetall, vorzugsweise aus Aluminium oder einer Aluminiumlegierung, ist.

6. Anordnung nach Anspruch 1, **dadurch gekennzeichnet, dass** das Einbauteil (6) auf einem Fahrzeugboden (13) aufliegt und mit seiner dem Fahrzeugboden (13) aufliegenden Seite punktuell, teil- oder ganzflächig mit dem Fahrzeugboden (13), vorzugsweise mittels Schweissverbindung, verbunden ist.

7. Anordnung nach Anspruch 6, **dadurch gekennzeichnet, dass** das Einbauteil (6) ein flächiges Bauteil mit einer Dicke von vorzugsweise weniger als 10 mm, insbesondere weniger als 5 mm, ist und das Einbauteil (6) teil- oder vollflächig mit dem Fahrzeugboden (13) verbunden ist.

8. Anordnung nach Anspruch 6, **dadurch gekennzeichnet, dass** der Fahrzeugboden (13) im Bereich des Einbauteils (6) aus gegeneinander gefügten, vorzugsweise quer zum Profilbauteil verlaufenden, Fahrzeugboden-Profilen (5), insbesondere Hohlprofile aus Aluminium besteht.

9. Anordnung nach Anspruch 1, **dadurch gekennzeichnet, dass** das Einbauteil (6) an einem der Aufprallfläche nächstliegenden Endabschnitt des Profilbauteils (3) befestigt ist.

10. Anordnung nach Anspruch 1, **dadurch gekennzeichnet, dass** ein oder mehrere Deformationselemente hinter der Aufprallfläche (9) angeordnet sind, derart dass ein Teil der Aufprallenergie vor, nach und/oder während des Abdrehens des Einbauteils (6) durch die Deformationselemente absorbiert wird.

11. Anordnung nach Anspruch 8, **dadurch gekennzeichnet, dass** ein oder mehrere Deformationselemente direkt oder indirekt mit dem Einbauteil (6) gekoppelt sind, derart dass die Aufprallkraft über das Einbauteil (6) teils auf das oder die Deformationselemente und teils auf das Profilbauteil (3) abgeleitet werden.

12. Anordnung nach Anspruch 1, **dadurch gekennzeichnet, dass** die Anordnung im frontund/oder Heckbereich des Fahrzeuges positioniert ist und das Profilbauteil (3) ein Fahrzeuglängsträger eines Fahrgestellrahmens ist und das Einbauteil (6) quer zur Fahrzeuglängsrichtung angeordnet ist und die Aufprallfläche (9) der Stirnseite (14) des Fahrzeuglängsträgers (3) um ein Längenmass (a) vorsteht.

## Claims

1. Road or rail vehicle comprising an arrangement for the absorption of impact energy, containing an insert (6) secured at an angle to the longitudinal side of a section component (3) by means of a first end face (10) and coupled by means of a second end face (11) via a collision component (12) to an impact surface (9) projecting beyond the section component (3), the impact surface (9) projecting beyond the end face (14) of the section component (3) by a linear amount (a), **characterised in that** the insert (6) is in the form of a rigid lever arm or part of a rigid lever arm having a length r, in such a manner that an impact force acting on the impact surface (9) causes rotation of the insert (6) about a predetermined centre of rotation (P) in the section component (3) and local bending of the section component (3) by an angular amount about the centre of rotation (P), with the collision component (12) being displaced in the direction of the impact force.

2. Arrangement according to claim 1, **characterised in that** the centre of rotation (P) in the section component (3) is situated in the edge region of the connection between the insert (6) and the section component (3), in such a manner that an impact force acting on the impact surface (9) causes rotation of the insert (6) having a radius r about the centre of rotation (P) and local bending of the section component (3).

3. Arrangement according to claim 1, **characterised in that** the section component (3) points in the same direction as the main component of the expected impact force, the insert (6) is arranged at an angle of 45° to 135°, preferably 80° to 100°, on the section component (3) by means of the first end face (10) and the impact surface (9) projects beyond the end face (14) of the section component (3) by a distance (a).

4. Arrangement according to claim 1, **characterised in that** the impact surface (9) projects beyond the end face (14) of the section component (3) by a linear amount (a) and the linear amount (a) is such that, when the impact forces act directly on the cross section or the end face (14) of the section component (3), the latter has already been bent by an angular amount of 0 to 30°, in particular 0 to 10°, about the centre of rotation (P).

5. Arrangement according to claim 1, **characterised in that** the section component (3) is a single-compartment or multi-compartment hollow section made of a ferrous or non-ferrous metal, in particular aluminium of an aluminium alloy, and the insert (6) is made of a ferrous or non-ferrous metal, preferably aluminium or an aluminium alloy.

6. Arrangement according to claim 1, **characterised in that** the insert (6) rests on a vehicle floor (13) and is joined at points or over all or part of its surface to the vehicle floor (13) by means of its side resting on the vehicle floor (13), preferably by means of a welded joint.

7. Arrangement according to claim 6, **characterised in that** the insert (6) is a flat component having a thickness of preferably less than 10 mm, in particular less than 5 mm, and the insert (6) is joined over all or part of its surface to the vehicle floor (13).

8. Arrangement according to claim 6, **characterised in that** the vehicle floor (13) consists in the region of the insert (6) of vehicle floor sections (5), in particular hollow sections made of aluminium, joined together and preferably extending transversely to the section component.

9. Arrangement according to claim 1, **characterised in that** the insert (6) is secured to an end portion of the section component (3) situated closest to the impact surface.

10. Arrangement according to claim 1, **characterised in that** one or more deformation elements are arranged behind the impact surface (9), in such a manner that part of the impact energy is absorbed by the deformation elements before, after and/or during the rotation of the insert (6).

11. Arrangement according to claim 8, **characterised in that** one or more deformation elements are coupled directly or indirectly to the insert (6), in such a manner that the impact force is diverted via the insert (6) partly on to the deformation element or elements and partly on to the section component (3).

12. Arrangement according to claim 1, **characterised in that** the arrangement is positioned in the front and/or rear region of the vehicle, the section component (3) is a longitudinal member of a chassis frame, the insert (6) is arranged transversely to the longitudinal direction of the vehicle and the impact surface (9) projects beyond the end face (14) of the longitudinal member (3) of the vehicle by a linear amount (a).

## Revendications

1. Voiture de tramway ou de chemin de fer présentant un agencement pour l'absorption de l'énergie d'un choc, contenant un composant de montage (6) qui est fixé obliquement par un premier côté d'extrémité (10) sur le côté longitudinal d'un composant profilé (3) et qui est couplé par un deuxième côté d'extrémité (11), par l'intermédiaire d'un composant de collision (12), à une surface de percussion (9) débordant par rapport au composé profilé (3), la surface de percussion (9) débordant d'une distance (a) par rapport au côté frontal (14) du composant profilé (3),
**caractérisée en ce que**
le composant de montage (6) est configuré à la manière d'un bras de levier rigide ou d'une partie d'un bras de levier rigide d'une longueur, r de telle sorte que la force d'un choc agissant sur la surface de percussion (9) a pour effet un déplacement de rotation du composant de montage (6) autour d'un centre de rotation (P) prédéterminé sur le composant profilé (3), avec déplacement du composant de collision (12) en direction de la force développée par le choc et une flexion locale du composant profilé (3) sur un angle autour du centre de rotation (P).

2. Agencement selon la revendication 1, **caractérisé en ce que** le centre de rotation (P) est situé dans le composant profilé (3) dans la zone du bord de la partie de liaison entre le composant de montage (6) et le composant profilé (3), de telle sorte que la force d'un choc agissant sur la surface de percussion (9) a pour effet un déplacement de rotation du composant de montage (6) sur un rayon r autour du centre de rotation (P) et une flexion locale du composant profilé (3).

3. Agencement selon la revendication 1, **caractérisé en ce que** le composant profilé (3) est orienté dans la même direction que la composante principale de la force du choc à laquelle il faut s'attendre, et le composant de montage (6) est disposé sous un angle de 45° à 135°, de préférence de 80° à 100°, sur le composant profilé (3) par son premier côté d'extrémité (10), la surface de percussion (9) du côté frontal (14) du composant profilé (3) débordant d'une distance (a).

4. Agencement selon la revendication 1, **caractérisé en ce que** la surface de percussion (9) déborde d'une distance (a) du côté frontal (14) du composant profilé (3), et la distance (a) est dimensionnée de telle sorte qu'au moment de l'action directe des forces du choc sur la section transversale ou sur le côté frontal (14) du composant profilé (3), ce dernier soit déjà replié d'un angle de 0 à 30°, en particulier de 0 à 10° à l'endroit du centre de rotation (P).

5. Agencement selon la revendication 1, **caractérisé en ce que** le composant profilé (3) est constitué d'un profilé creux à une ou plusieurs chambres en un métal ferreux ou non ferreux, en particulier en aluminium ou en alliage d'aluminium, le composant de montage (6) étant constitué d'un métal ferreux ou non ferreux, de préférence en aluminium ou en un alliage d'aluminium.

6. Agencement selon la revendication 1, **caractérisé en ce que** le composant de montage (6) est placé sur le plancher (13) d'un véhicule et est relié sur son côté placé sur le plancher (13) du véhicule au plancher (13) du véhicule par points, sur une partie ou sur toute sa surface, de préférence par une liaison soudée.

7. Agencement selon la revendication 6, **caractérisé en ce que** le composant de montage (6) est un composant plat d'une épaisseur de préférence inférieure à 10 mm, en particulier inférieure à 5 mm, le composant de montage (6) étant relié au plancher (13) du véhicule sur une partie ou sur la totalité de sa surface.

8. Agencement selon la revendication 6, **caractérisé en ce que** dans la zone du composant de montage (6), le plancher (13) du véhicule est constitué de profilés (5) de plancher de véhicule, en particulier de profilés creux en aluminium, qui sont jointifs les uns par rapport aux autres et qui s'étendent de préférence transversalement par rapport au composant profilé.

9. Agencement selon la revendication 1, **caractérisé en ce que** le composant de montage (6) est fixé sur une partie d'extrémité du composant profilé (3) la plus proche de la surface de percussion.

10. Agencement selon la revendication 1, **caractérisé en ce qu'**un ou plusieurs éléments de déformation sont disposés en arrière de la surface de percussion (9) de telle sorte qu'une partie de l'énergie du choc soit absorbée par les éléments de déformation avant, après et/ou pendant la rotation du composant de montage (6).

11. Agencement selon la revendication 8, **caractérisé en ce qu'**un ou plusieurs éléments de déformation sont couplés directement ou indirectement au composant de montage (6) de telle sorte que la force du choc soit déviée par le composant de montage (6) en partie sur le ou les éléments de déformation et en partie sur le composant profilé (3).

12. Agencement selon la revendication 1, **caractérisé en ce que** l'agencement est placé dans la zone avant et/ou arrière du véhicule, le composant profilé (3) étant un support longitudinal du châssis du véhicule et le composant de montage (6) étant disposé transversalement par rapport au sens de la longueur du véhicule, la surface de percussion (9) débordant d'une distance (a) du côté frontal (14) du support longitudinal (3) du véhicule.
